# EUROPEAN PATENT SPECIFICATION

(11) **EP 2 343 436 B1**
(45) Date of publication and mention of the grant of the patent: **09.04.2014**
(21) Application number: 10173536.3
(22) Date of filing: 20.08.2010
(51) Int. Cl.: F03B 3/10, F03B 15/16

(54) **Power generation system control apparatus for adjustable-speed, pumped-storage power plant**
Leistungssteuerungseinrichtung für Energieerzeugungssystem vom Pumpen-Aufschlagstyp mit veränderlicher Geschwindigkeit
Appareil de régulation pour système de génération d'énergie avec générateur du type pompe-accumulation à vitesse variable

(30) Priority: 07.01.2010 JP 2010001752
(43) Date of publication of application: 13.07.2011
(73) Proprietor: Hitachi Mitsubishi Hydro Corporation, Minato-ku Tokyo 108-0014 (JP)
(72) Inventor: Shimizu, Hidetsugu, Tokyo 100-8310 (JP); Sato, Yuji, Tokyo 100-8310 (JP)
(74) Representative: Popp, Eugen

(56) References cited:
- JP-A- 59 046 373
- JP-A- 61 070 172
- JP-B2- 3 783 838
- US-A1- 2009 021 011

## Description

### BACKGROUND OF THE INVENTION

### 1. Field of the Invention

The present invention relates to a control apparatus for a power generation system of an adjustable-speed, pumped-storage power plant and, in particular, to a control apparatus for preventing and suppressing inversion of revolving speed in an initial stage of adjustment of a power generating load.

### 2. Description of the Related Art

To facilitate understanding of a conventional control apparatus and the later-discussed present invention, the configuration and working of an adjustable-speed, pumped-storage power plant are first described.

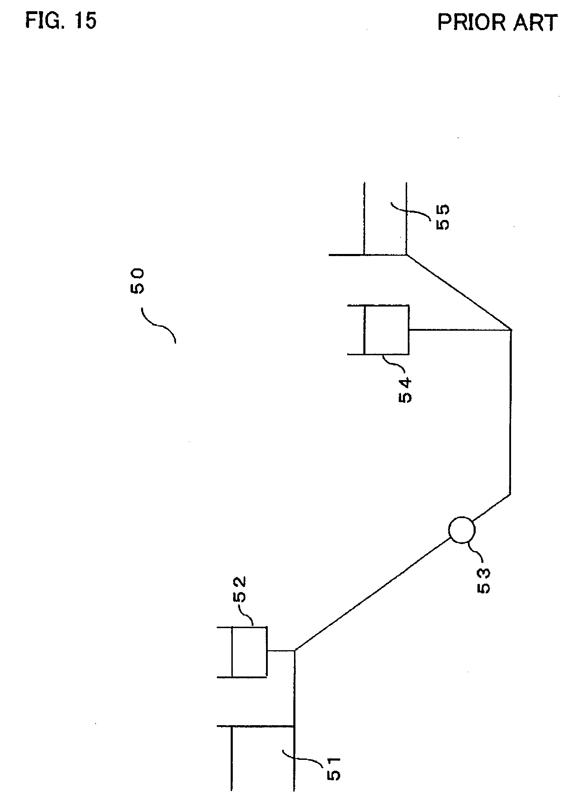

FIG. 15 shows how an upper reservoir 51, an upper surge tank 52, a pump-turbine/generator-motor 53, a lower surge tank 54 and a lower reservoir 55 are arranged in a conventional adjustable-speed, pumped-storage power plant 50. While this adjustable-speed, pumped-storage power plant 50 is run to generate electric power, the aforementioned pump-turbine/generator-motor 53 including a pump turbine and a generator-motor operates with water flowing from the upper reservoir 51 to the lower reservoir 55 through a water pipe. Thus, energy is input to the pump turbine of the pump-turbine/generator-motor 53 and this energy input to the pump turbine is transmitted to the generator-motor of the pump-turbine/generator-motor 53 and converted into output power. A difference between the input to the pump turbine and an output of the generator-motor is acceleration/deceleration energy supplied to the pump-turbine/generator-motor 53. Specifically, if the input-output difference obtained by subtracting the aforementioned output from the aforementioned input is positive, acceleration energy is produced, thereby accelerating the pump-turbine/generator-motor 53 and increasing revolving speed thereof. If the difference is negative, on the other hand, the pump-turbine/generator-motor 53 is decelerated and the revolving speed is reduced.

The output of the generator-motor of the pump-turbine/generator-motor 53 is instantaneously controlled by an excitation device. However, since the input to the pump turbine of the pump-turbine/generator-motor 53 is controlled by a servo control system constituting a guide vane control system which is a mechanical system, there occurs a delay in a response of the input to the pump turbine as compared to the output of the generator-motor of the pump-turbine/generator-motor 53. For this reason, an inverting phenomenon occurs in the output power or in the revolving speed, wherein whether the inverting phenomenon occurs in the output power or in the revolving speed depends on whether which one of the output power and the revolving speed is controlled by an excitation control system and which one is controlled by the guide vane control system.

The aforementioned inverting phenomenon can be explained as follows. It is possible to quickly increase or decrease the input to the pump turbine by quickly controlling the amount of inflow water. The amount of water supplied to the pump turbine is controlled by increasing or decreasing the same by varying guide vane opening. Thus, guide vanes are controlled to open when increasing the output of the generator-motor and the guide vanes are controlled to close when decreasing the output of the generator-motor.

If the guide vanes are opened to increase the output of the generator-motor, however, an effective head decreases. Therefore, there is a possibility of inducing one form of the inverting phenomenon in which the pump turbine input decreases due to effects of the rate of change in pump turbine flow rate and the rate of change in the effective head despite an intention to increase the pump turbine input.

Also, if the guide vanes are closed to decrease the output of the generator-motor, the effective head increases. Therefore, there is a possibility of inducing another form of the inverting phenomenon in which the pump turbine input increases due to effects of the rate of change in the pump turbine flow rate and the rate of change in the effective head despite an intention to decrease the pump turbine input.

Japanese Examined Patent Publication No. 3783838 introduces a below-described control apparatus as an example of the prior art for quickly increasing and decreasing the pump turbine flow rate regardless of the effective head by quickly operating guide vanes in order to prevent and suppress the aforementioned inverting phenomenon.

The control apparatus of this prior art example is provided with a guide vane opening optimization function for generating a guide vane opening command value, a revolving speed controller, a revolving speed optimization function for generating a revolving speed command value, a differentiator and an adder, wherein when outputting a power command value for increasing output power, for example, the guide vane opening optimization function outputs the guide vane opening command value biased in a guide vane opening direction and the revolving speed optimization function outputs the revolving speed command value that increases the revolving speed.

A revolving speed control signal for controlling the revolving speed is output on the basis of a revolving speed deviation obtained by subtracting a true revolving speed of the pump turbine from the revolving speed command value. The inverting phenomenon is prevented and suppressed by differentiating the aforementioned guide vane opening command value by the differentiator and adding the result of differentiation to the guide vane opening command value by the adder.

While the technique described in the aforementioned prior art example exerts a sufficient effect on relatively moderate variations in an output power command value, the amount of control is not large enough to cope with rapid changes in the output power command value. As rapid and delicate output adjustment of a generator has been progressively required particularly in recent years, it has been recognized that one may encounter a situation where the technique of the prior art example cannot be used to properly deal with the situation.

In the case of a plant in which two adjustable-speed, pumped-storage generator-motors arranged parallel to each other are joined to a common water pipe laid from an upper reservoir, variations in flow rate become so large if one attempts to simultaneously vary outputs of the two generator-motors compared to a case where only one generator-motor is installed. Thus, there is a possibility that the revolving speed goes out of a variable speed range if the technique described in the prior art example is employed. For this reason, it has been necessary to provide a large margin for excitation capacity so that the generator-motor can continue to operate.

### SUMMARY OF THE INVENTION

The present invention has been made to solve the aforementioned problems. Accordingly, it is an object of the invention to provide a power generation system control apparatus for an adjustable-speed, pumped-storage power plant which suppresses excessive variations in revolving speed of an adjustable-speed, pumped-storage generator-motor during power generating load adjustment performed in the event of a rapid change in a power command value or a major change in flow rate, for example, and decreases a margin of excitation capacity to thereby achieve improved economy.

According to the invention, a power generation system control apparatus for an adjustable-speed, pumped-storage power plant includes a revolving speed control signal generator for calculating a revolving speed command value on the basis of a power command value and an effective head of a pump turbine and generating a revolving speed control signal on the basis of a deviation between the revolving speed command value and a true revolving speed of the pump turbine, a guide vane control signal generator for calculating a guide vane control command value on the basis of the power command value and the effective head of the pump turbine and generating a guide vane control signal by subtracting a true guide vane opening from the guide vane control command value, and an adder for generating a servo control system signal by adding the revolving speed control signal and the guide vane control signal. In this power generation system control apparatus, the revolving speed control signal generator includes a revolving speed optimization function for calculating the revolving speed command value on the basis of the power command value and the effective head of the pump turbine, and the guide vane control signal generator includes a guide vane opening optimization function for calculating a guide vane opening command value on the basis of the power command value and the effective head of the pump turbine, a differentiation circuit section for performing two-step differentiation of a value which is based on the power command value, and an adder which adds an output of the differentiation circuit section to the guide vane opening command value and outputs the guide vane control command value thus obtained.

As the present invention employs the above-described configuration, it is possible to avoid inversion of revolving speed of an adjustable-speed, pumped-storage generator-motor and suppress excessive variations in the revolving speed during power generating load adjustment performed in the event of a rapid change in a power command value or a major change in flow rate, for example. Since this configuration serves to decrease a margin of excitation capacity of the generator-motor, the invention produces an excellent effect that makes it possible to provide a power generation system control apparatus for an adjustable-speed, pumped-storage power plant featuring improved economy.

The foregoing and other objects, features, aspects and advantages of the present invention will become more apparent from the following detailed description when read in conjunction with the accompanying drawings.

### BRIEF DESCRIPTION OF THE DRAWINGS

FIG. 1 is a block diagram of a power generation system control apparatus according to a first embodiment of the invention;
FIGS. 2A-2E are diagrams for explaining variations in revolving speed that occur when a power command value is increased according to the first embodiment;
FIGS. 3A-3E are diagrams for explaining variations in revolving speed that occur when the power command value is decreased according to the first embodiment;
FIG. 4 is a block diagram of a power generation system control apparatus according to a second embodiment of the invention;
FIGS. 5A-5F are diagrams for explaining variations in revolving speed that occur when the power command value is increased according to the second embodiment;
FIGS. 6A-6F are diagrams for explaining variations in revolving speed that occur when the power command value is decreased according to the second embodiment;
FIG. 7 is a block diagram of a power generation system control apparatus according to a third embodiment of the invention;
FIGS. 8A-8F are diagrams for explaining variations in revolving speed that occur when the power command value is increased according to the third embodiment;
FIGS. 9A-9F are diagrams for explaining variations in revolving speed that occur when the power command value is decreased according to the third embodiment;
FIG. 10 is a block diagram of a power generation system control apparatus according to fourth and fifth embodiments;
FIGS. 11A-11J are diagrams for explaining variations in revolving speed that occur when the power command value is increased according to the fourth embodiment;
FIGS. 12A-12J are diagrams for explaining variations in revolving speed that occur when the power command value is decreased according to the fourth embodiment;
FIGS. 13A-13J are diagrams for explaining variations in revolving speed that occur when the power command value is increased according to the fifth embodiment;
FIGS. 14A-14J are diagrams for explaining variations in revolving speed that occur when the power command value is decreased according to the fifth embodiment; and
FIG. 15 is a diagram showing the configuration of a conventional adjustable-speed, pumped-storage power plant.

### DETAILED DESCRIPTION OF THE PREFERRED

### EMBODIMENTS OF THE INVENTION

Specific embodiments of the present invention are now described with reference to the accompanying drawings.

### FIRST EMBODIMENT

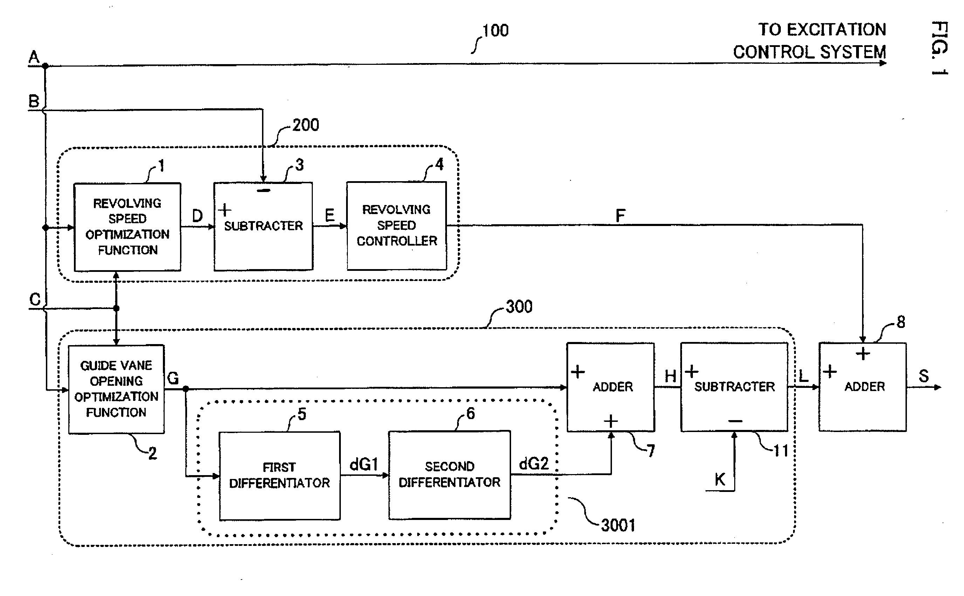

FIG. 1 is a block diagram of a power generation system control apparatus 100 according to a first embodiment of the invention. The following discussion deals with the configuration of the power generation system control apparatus 100.

Referring to FIG. 1, the power generation system control apparatus 100 of an adjustable-speed, pumped-storage power plant according to the first embodiment includes a revolving speed control signal generator 200 for calculating a revolving speed command value D on the basis of a power command value A and an effective head C of a pump turbine and generating a revolving speed control signal F on the basis of a deviation E between the revolving speed command value D and a true revolving speed B of the pump turbine, a guide vane control signal generator 300 for calculating a guide vane control command value H on the basis of the power command value A and the effective head C of the pump turbine and generating a guide vane control signal L by subtracting a true guide vane opening K from the guide vane control command value H, and an adder 8 for generating a servo control system signal S by adding the revolving speed control signal F and the guide vane control signal L.

The power command value A which determines an output of an adjustable-speed generator-motor connected to the pump turbine is input into a revolving speed optimization function 1 provided in the revolving speed control signal generator 200 and a guide vane opening optimization function 2 provided in the guide vane control signal generator 300 of the pump turbine. The effective head C of the pump turbine is also input into the revolving speed optimization function 1 and the guide vane opening optimization function 2. The revolving speed optimization function 1 outputs an optimum revolving speed command value D on the basis of the power command value A and the effective head C of the pump turbine. A subtracter 3 calculates a difference between the optimum revolving speed command value D and the true revolving speed B of the pump turbine and outputs the revolving speed deviation E, and a revolving speed controller 4 into which this output E is input generates the revolving speed control signal F. On the other hand, the guide vane opening optimization function 2 into which the power command value A and the effective head C of the pump turbine are input outputs an optimum guide vane opening command value G. A first differentiator 5 provided in a differentiation circuit section 3001 into which the guide vane opening command value G is input outputs a differential dG1 according to a change in the guide vane opening command value G.

A second differentiator 6 also provided in the differentiation circuit section 3001 outputs a differential dG2 of the output dG1 of the first differentiator 5. An adder 7 provided in the guide vane control signal generator 300 generates the guide vane control command value H by adding the guide vane opening command value G and the output dG2 of the second differentiator 6. A subtracter 11 also provided in the guide vane control signal generator 300 generates the guide vane control signal L by subtracting the true guide vane opening K from the guide vane control command value H. The adder 8 generates the servo control system signal S by adding the revolving speed control signal F and the guide vane control signal L and outputs the servo control system signal S to a servo control system. Guide vanes of the pump turbine are controlled to open and close by the servo control system signal S and, as a result, the output of the generator-motor is regulated.

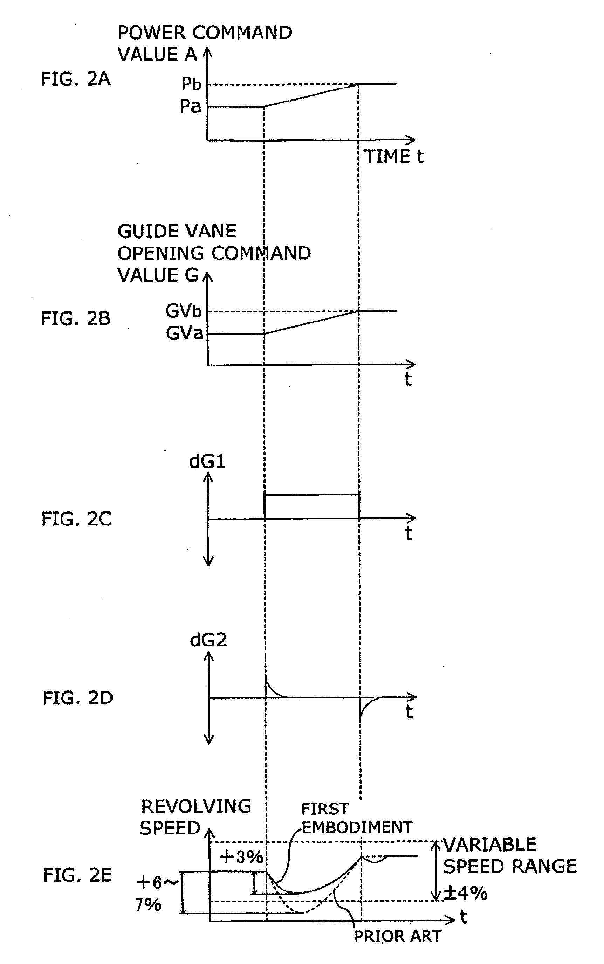

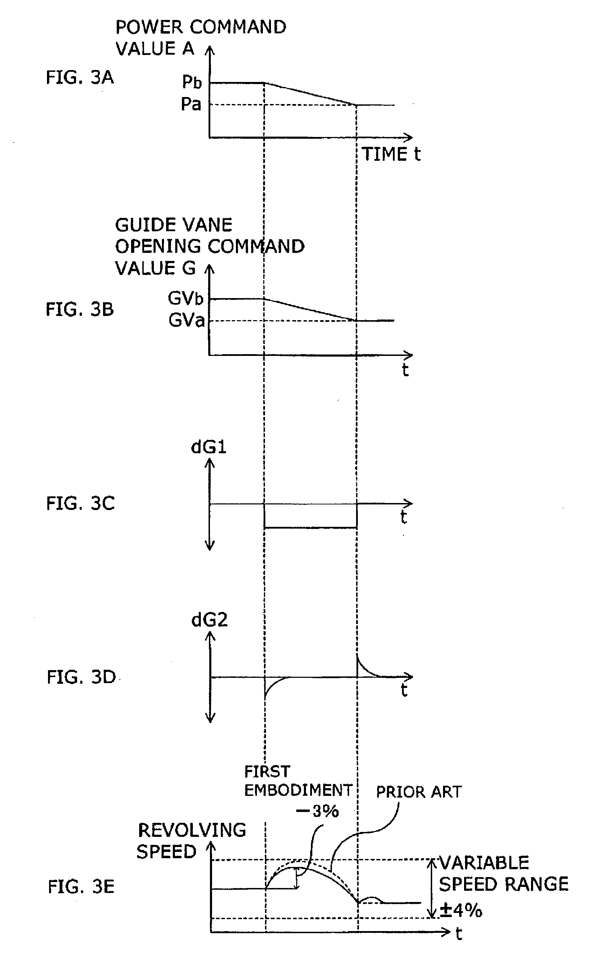

Described next with reference to FIGS. 2A-2E and FIGS. 3A-3E is operation performed by the differentiation circuit section 3001 including the first differentiator 5 and the second differentiator 6, by which the first embodiment is characterized, to suppress excessive variations in revolving speed of a pump-turbine/generator-motor that can occur when the power command value A is rapidly varied. It is to be noted that FIGS. 2A-2E depict a case where the power command value A is increased and FIGS. 3A-3E depict a case where the power command value A is decreased. Discussed below is the case where the power command value A is increased. When the power command value A is increased from Pa to Pb as shown in FIG. 2A, the guide vane opening optimization function 2 calculates the optimum guide vane opening command value G on the basis of the power command value A and the effective head C of the pump turbine and increases the guide vane opening command value G which is a guide vane opening target value from GVa to GVb as shown in FIG. 2B. The first differentiator 5 outputs the differential dG1 which corresponds to a change in the guide vane opening command value G, or GVa-GVb, as shown in FIG. 2C. The second differentiator 6 differentiates the output dG1 of the first differentiator 5 and outputs the differential dG2 as shown in FIG. 2D.

The differential output dG2 of the second differentiator 6 which is an output of the differentiation circuit section 3001 and the guide vane opening command value G are added to generate the guide vane control command value H which is an increased control target value. The guide vane control signal L obtained by subtracting the true guide vane opening K from the aforementioned guide vane control command value H indicates a control error which entails a larger amount of control at the beginning of a change in the power command value A than in the prior art. Since the guide vanes of the pump turbine are controlled to open and close by the servo control system signal S obtained by adding the revolving speed control signal F to the aforementioned guide vane control signal L, the amount of water increases, making it possible to suppress a reduction in the revolving speed. While the revolving speed could vary within a variable range of +6% to 7% which goes out of a variable speed range of ±4% in the prior art example, the variable range is reduced to +3% which falls within the variable speed range in this first embodiment as shown in FIG. 2E. Given below is a detailed description of variations in revolving speed depicted in FIG. 2E.

While in operation at a constant load, the adjustable-speed generator-motor is operated at an efficient revolving speed, such as 582 revolutions per minute (rpm), within a range in which sliding action is positive and the revolving speed does not go out of the variable speed range, e.g., a range of ±4%, even if the revolving speed temporarily drops as a result of control with an increased load (increased power command value). Here, the aforementioned variable speed range, which is determined according to the type and size of the pump turbine, is set at ±4% not only in this first embodiment but also in later-described second to fifth embodiments. Also, a positive direction of the variable speed range is defined to indicate a revolving speed of 576 rpm which is +4% with respect to 600 rpm and a negative direction is defined to indicate a revolving speed of 624 rpm which is -4% with respect to 600 rpm, for example.

Conventionally, in a case where a load of one adjustable-speed generator-motor is increased at a common increase rate which is 0% to 100% per 60 seconds, the revolving speed is controlled such that the adjustable-speed generator-motor operates within the variable speed range by applying the technique of the earlier-described prior art example.

It has been recognized, however, that in a case where two adjustable-speed generator-motors are installed on the same water pipe and loads applied to both generator-motors are simultaneously increased or in a case where an increase rate is increased to 0% to 100% per 40 seconds, for example, as recently required, the revolving speed can go out of the variable speed range according to the aforementioned prior art technique, leading to a situation in which the revolving speed drops by as much as 6% to 7% as shown in FIG. 2E. In a case where the revolving speed goes out of the variable speed range as mentioned above, it is necessary that excitation capacity have a large margin so that the generator-motor can continue to operate until the revolving speed returns to a level falling within the variable speed range.

In the present first embodiment, the guide vane control command value H which defines the control target value is generated by adding the guide vane opening command value G to the output value dG2 which is obtained through two-step differentiation of the guide vane opening command value G performed by the differentiation circuit section 3001 including the first differentiator 5 and the second differentiator 6. Since the output dG2 of the second differentiator 6 occurs only when the output dG1 of the first differentiator 5 changes, it is possible to increase the guide vane control command value H at the beginning of the change in the power command value A. Then, as the power generation system control apparatus 100 performs revolving speed control by using the servo control system signal S obtained by adding the revolving speed control signal F to the guide vane control signal L which defines a large amount of control at the beginning of the change in the power command value A, the reduction in the revolving speed is kept to a level not exceeding +3%. This means that it is possible to suppress the reduction in the revolving speed to a range falling within the variable speed range of +4% even in the event of a rapid change in output or in flow rate, for example, as mentioned above. It is also possible to achieve a reduction in size of an excitation device as the margin of the excitation capacity of the adjustable-speed generator-motor can be reduced.

Described next is the case where the power command value A is decreased. FIGS. 3A-3E correspond respectively to FIGS. 2A-2E depicting the above-described case of the increased power command value. Although values shown in FIGS. 3A-3E are in directions opposite to the directions shown in the aforementioned case of the increased power command value, individual operating steps are the same.

Specifically, when the power command value A is decreased from Pb to Pa as shown in FIG. 3A, the guide vane opening optimization function 2 decreases the guide vane opening command value G from GVb to GVa as shown in FIG. 3B. The first differentiator 5 outputs the differential dG1 corresponding to a change expressed by GVb-GVa as shown in FIG. 3C. The second differentiator 6 differentiates the output dG1 of the first differentiator 5 and outputs the differential dG2 as shown in FIG. 3D. The guide vanes are controlled to open and close at a high speed by the servo control system signal S obtained by adding the revolving speed control signal F to the guide vane control signal L obtained by subtracting the true guide vane opening K from the guide vane control command value H which is obtained by adding the output dG2 of the second differentiator 6 and the guide vane opening command value G. This serves to increase the amount of water, making it possible to suppress an increase in the revolving speed. As shown in FIG. 3E, the increase in the revolving speed is -3% in the first embodiment, which indicates that the range of revolving speed variations is reduced to fall within the variable speed range.

Now, a detailed description of revolving speed variations is provided below with reference to FIG. 3E.

While in operation at a constant load, the adjustable-speed generator-motor is operated at an efficient revolving speed within a range in which sliding action is positive and the revolving speed does not go out of the variable speed range in the case of a decreased load as in the above-described case of the increased load. The revolving speed temporarily increases when the power command value is decreased as shown in FIG. 3E. Since the adjustable-speed generator-motor is operated at a revolving speed at which the sliding action is positive, however, there is a tolerance beyond which the revolving speed goes out of the variable speed range even with the technique of the earlier-described prior art example, although there could be cases where the revolving speed would go out of the variable speed range on rare occasions.

In the present first embodiment, however, the guide vane control command value H which defines the control target value is generated by adding the guide vane opening command value G and the output value dG2 which is obtained through two-step differentiation of the guide vane opening command value G performed by the differentiation circuit section 3001 including the first differentiator 5 and the second differentiator 6. Since the output dG2 of the second differentiator 6 occurs only when the output dG1 of the first differentiator 5 changes, it is possible to increase the guide vane control command value H at the beginning of the change in the power command value A. Then, as the power generation system control apparatus 100 performs revolving speed control by using the servo control system signal S obtained by adding the revolving speed control signal F to the guide vane control signal L which defines a large amount of control at the beginning of the change in the power command value A, the increase in the revolving speed is kept to a level not exceeding -3%. This means that it is possible to suppress the increase in the revolving speed to a range falling within the variable speed range of ±4% even in a case where two adjustable-speed generator-motors are installed on the same water pipe and loads applied thereto are simultaneously decreased or in a case where a decrease rate is increased. It is also possible to more suppress the increase in the revolving speed than in the prior art example. Additionally, it is possible to achieve a reduction in size of the excitation device as the margin of the excitation capacity of the adjustable-speed generator-motor can be reduced.

The first embodiment is provided with an arrangement for performing control operation by use of the control target value obtained by adding the guide vane opening command value G and the output value dG2 which is obtained through two-step differentiation of the guide vane opening command value G performed by the differentiation circuit section 3001 including the first differentiator 5 and the second differentiator 6 as discussed above. Therefore, even in a case where two adjustable-speed generator-motors are installed on the same water pipe and loads applied thereto are simultaneously increased or decreased or in a case where the increase/decrease rate is increased, the revolving speed is so controlled as to fall within the variable speed range. This makes it possible to operate the adjustable-speed generator-motor in a manner that excessive variations in the revolving speed are suppressed. It is also possible to achieve a reduction in size of the excitation device as the margin of the excitation capacity can be reduced.

### SECOND EMBODIMENT

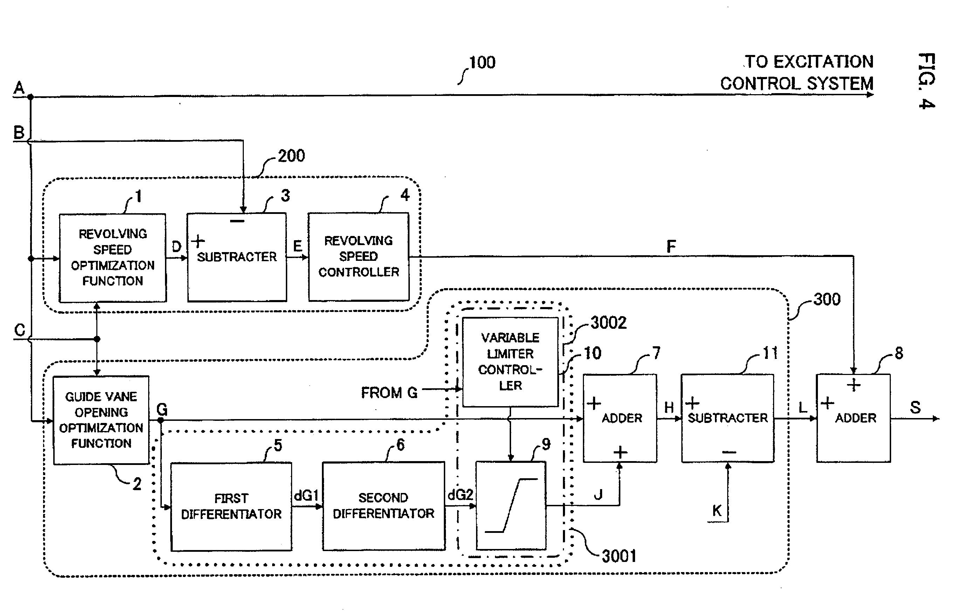

The configuration of a power generation system control apparatus 100 according to the second embodiment of the invention is now described with reference to FIG. 4.

As shown in FIG. 4, the second embodiment additionally employs a differential output control unit 3002 which includes a variable limiter 9 connected to the second differentiator 6 of the differentiation circuit section 3001 described in the foregoing first embodiment for limiting the output dG2 of the second differentiator 6 and a variable limiter controller 10 for controlling a limit range of the variable limiter 9. As the second embodiment is otherwise the same as the first embodiment, a full description of the configuration of the second embodiment is not provided herein. A reason for the provision of the variable limiter 9 is an intention to improve a situation regarding fluctuations in guide vane opening and variations in revolving speed that occur as depicted in FIG. 2E when the output dG2 of the second differentiator 6 becomes negative at the end of a command for increasing the power command value A as discussed earlier in the first embodiment with reference to FIG. 2D, for example.

The variable limiter 9 shown in FIG. 4 is for limiting the output dG2 of the second differentiator 6 and the variable limiter controller 10 sets the limit range of the variable limiter 9. In this second embodiment, if a change in the guide vane opening command value G is positive, for example, the limit range of the variable limiter 9 is set to have an upper limit whose value does not limit the output dG2 of the second differentiator 6 and a lower limit whose value is equal to or close to zero. If the change in the guide vane opening command value G has a value equal to or close to zero, on the other hand, the upper and lower limits are set at values equal to or close to zero. Also, if the change in the guide vane opening command value G is negative, the upper limit is set at a value equal to or close to zero and the lower limit is set at a value which does not limit the output dG2 of the second differentiator 6. Further, if the output dG2 of the second differentiator 6 is zero or small due to the fact that the power command value A is constant or a changing speed thereof is small, the upper and lower limits are set at values equal to or close to zero. This arrangement makes it possible to provide the power generation system control apparatus 100 which suppresses undesirable fluctuations in the revolving speed that occur during other than a period of a change in the power command value A, or during other than a load adjustment process. The aforementioned variable limiter controller 10 is configured with means for controllably exciting the variable limiter 9, for example.

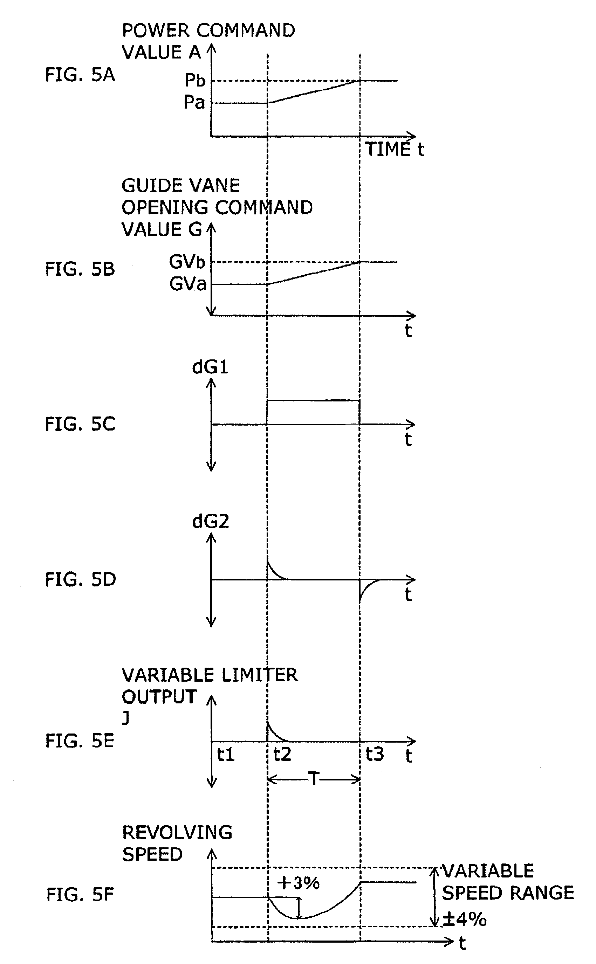

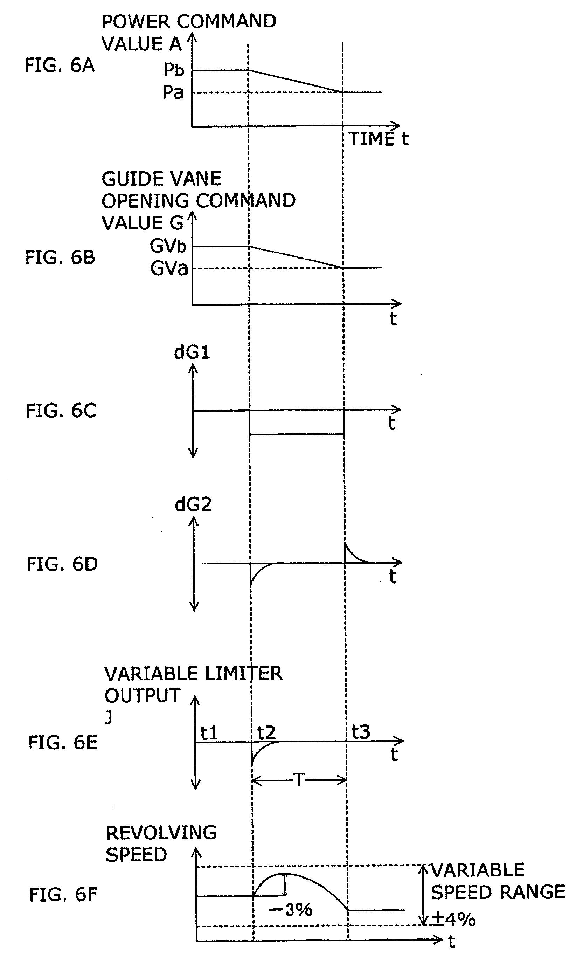

Now, the working of the power generation system control apparatus 100 according to the second embodiment is described with reference to FIGS. 5A-5F and 6A-6F.

A case where the power command value A is increased and a case where the power command value A is decreased are both the same as what has been discussed earlier with reference to FIGS. 2A-2D and 3A-3D up to FIGS. 5A-5D and 6A-6D, respectively, so that a full description is not provided herein. First described here is the case where the power command value A is increased as in the first embodiment. Referring to FIG. 5E, the variable limiter controller 10 of the differential output control unit 3002 sets the upper and lower limits of the limit range of the variable limiter 9 at values equal to or close to zero during a period from time t1 to time t2 when the change in the guide vane opening command value G has a value equal to or close to zero and, thus, the variable limiter 9 does not produce any output during this period. During a period T from time t2 to time t3 when the change in the guide vane opening command value G is positive, the lower limit of the limit range of the variable limiter 9 is set at a value equal to or close to zero and the upper limit does not exert any limiting effect, so that an output of the variable limiter 9 is always in a positive direction. Then, during a period from t3 onward when the change in the guide vane opening command value G has a value equal to or close to zero, the upper and lower limits of the limit range of the variable limiter 9 are set at values equal to or close to zero, so that the output of the variable limiter 9 is absent. The variable limiter controller 10 provided in the differential output control unit 3002 controls the upper and lower limits of the limit range of the variable limiter 9 in the aforementioned manner so that the variable limiter 9 produces only such an output chosen from among outputs dG2 of the second differentiator 6 that occurs during the period T when the guide vane opening command value G varies in a positive direction, the output of the variable limiter 9 having a polarity corresponding to the direction of change in the guide vane opening command value G. The output J of the variable limiter 9 is added to the guide vane opening command value G to generate the guide vane control command value H which is a control target value. Then, as the power generation system control apparatus 100 performs revolving speed control by using the servo control system signal S obtained by adding the revolving speed control signal F to the guide vane control signal L which indicates a control error, it is possible to suppress undesirable fluctuations in the guide vane opening that could occur at or after time t3 which is a point in time when a change in the power command value A completes as shown in FIG. 5F. It is also possible to keep the variable range of the revolving speed to +3% as in the first embodiment and, therefore, a reduction in the revolving speed can be suppressed to a range falling within the variable speed range of +4%.

FIGS. 6A-6F depicting the case where the power command value A is decreased correspond respectively to FIGS. 5A-5F depicting the above-described case where the power command value A is increased. Although values shown in FIGS. 6A-6F are in directions opposite to the directions shown in the case of the increased power command value, operations in individual steps are the same, so that a full description is not provided herein.

A reason why the values shown in FIG. 6E are only in a negative direction unlike the case shown in FIG. 5E is that the variable limiter controller 10 sets the upper limit of the limit range of the variable limiter 9 at a value equal to or close to zero and the lower limit of the limit range at a value which does not limit the output dG2 of the second differentiator 6 during the period T from time t2 to time t3 when the change in the guide vane opening command value G is negative. The variable limiter controller 10 provided in the differential output control unit 3002 controls the upper and lower limits of the limit range of the variable limiter 9 in such a manner that the variable limiter 9 produces only such an output chosen from among outputs dG2 of the second differentiator 6 that occurs during the period T when the guide vane opening command value G varies in a negative direction, the output of the variable limiter 9 having a polarity corresponding to the direction of change in the guide vane opening command value G in this case as well. Even in the case where the power command value A is decreased, it is possible to suppress undesirable fluctuations in the guide vane opening that could occur at or after time t3 which is a point in time when the change in the power command value A completes as shown in FIG. 6F. It is also possible to keep the variable range of the revolving speed to -3% as in the first embodiment and, therefore, an increase in the revolving speed can be suppressed to a range falling within the variable speed range of ±4%.

In the above-described second embodiment, the differentiation circuit section 3001 includes the differential output control unit 3002 which is provided with the variable limiter 9 for limiting the output dG2 of the second differentiator 6 and the variable limiter controller 10 for controlling the limit range of the variable limiter 9, the embodiment employing an arrangement for performing control operation by use of the increased control target value obtained by adding the variable limiter output J to the guide vane opening command value G. Therefore, it is possible to eliminate fluctuations in the undesirable control error from the guide vane control signal L. This means that the second embodiment is effective in that this embodiment can suppress fluctuations in the guide vane opening and improve the situation regarding fluctuations in the revolving speed more than the aforementioned first embodiment.

### THIRD EMBODIMENT

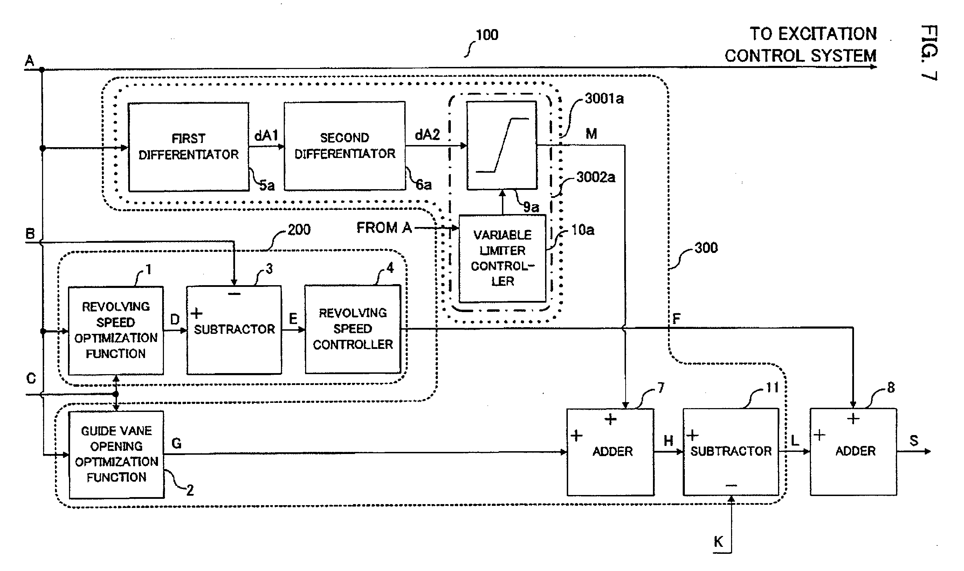

The configuration of a power generation system control apparatus 100 according to the third embodiment of the invention is now described with reference to FIG. 7.

The third embodiment employs a differentiation circuit section 3001a that receives the power command value A as an input value instead of the differentiation circuit section 3001 of the second embodiment shown in FIG. 4 that receives the guide vane opening command value G as an input value. The differentiation circuit section 3001a is provided with a first differentiator 5a which outputs a differential dA1 of the power command value A according to a change therein, a second differentiator 6a which outputs a differential dA2 of the output dA1 of the first differentiator 5a, and a differential output control unit 3002a which includes a variable limiter 9a connected to the second differentiator 6a for limiting the output dA2 thereof and a variable limiter controller 10a for controlling the limit range of the variable limiter 9a. As the third embodiment is the same as the second embodiment in other respects than described hereunder, a full description of the configuration of the third embodiment is not provided herein.

The variable limiter controller 10a shown in FIG. 7 calculates a difference between the power command value A specifying an AC output at a current time and the power command value A specifying an AC output at a time one or more cycles before. Then, the variable limiter controller 10a sets a lower limit of the limit range of the variable limiter 9a at a value equal to or close to zero if this difference is positive, sets an upper limit of the limit range of the variable limiter 9a at a value equal to or close to zero if the difference is negative, and sets the upper and lower limits of the limit range of the variable limiter 9a at values equal to or close to zero if the difference remains unchanged or is extremely small. Subsequently, the adder 7 outputs the guide vane control command value H obtained by adding an output M of the variable limiter 9a and the guide vane opening command value G. The subtracter 11 subtracts the true guide vane opening K from the guide vane control command value H to thereby generate the guide vane control signal L indicating a control error. Operation performed thereafter in the third embodiment is otherwise the same as performed in the second embodiment.

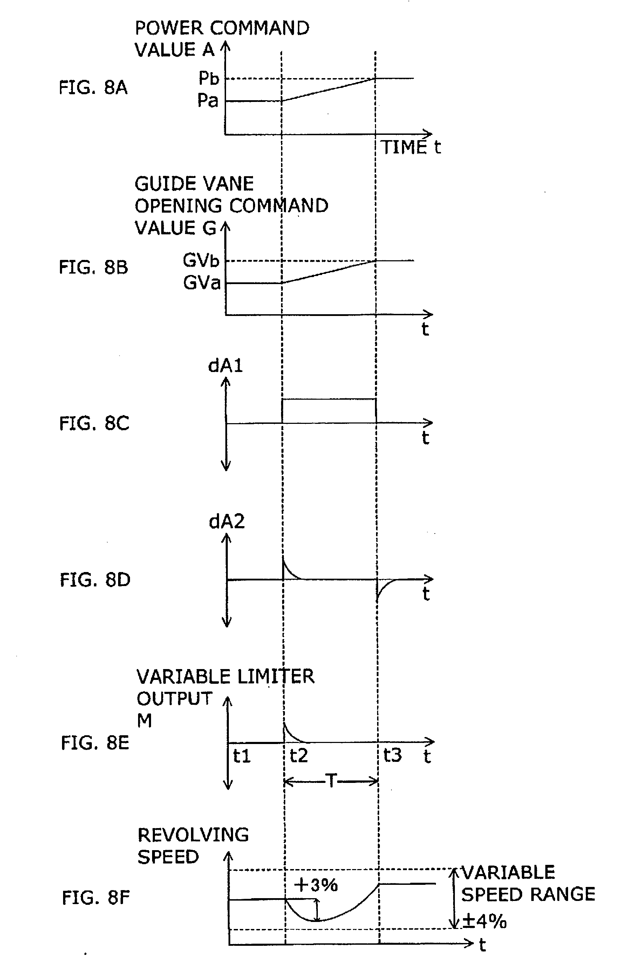

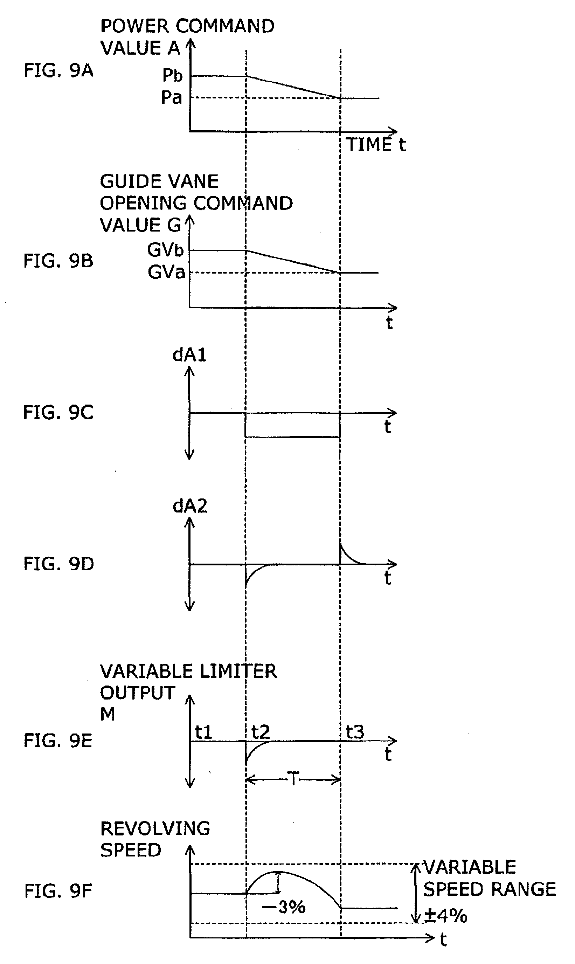

Now, the working of the power generation system control apparatus 100 according to the third embodiment is described with reference to FIGS. 8A-8F and 9A-9F. The following discussion deals primarily with a case where the power command value A is increased.

When the power command value A is increased from Pa to Pb as shown in FIG. 8A, the guide vane opening optimization function 2 increases the guide vane opening command value G from GVa to GVb as shown in FIG. 8B. The first differentiator 5a outputs the differential dA1 which corresponds to a change in the power command value A at the current time as shown in FIG. 8C. The second differentiator 6a differentiates the output dA1 of the first differentiator 5a and outputs the differential dA2 as shown in FIG. 8D. Referring to FIG. 8E, the variable limiter controller 10a of the differential output control unit 3002a sets the upper and lower limits of the limit range of the variable limiter 9a at values equal to or close to zero during a period from time t1 to time t2 when the difference between the power command value A specifying the AC output at the current time and the power command value A specifying the AC output at the time one or more cycles before has a value equal to or close to zero and, thus, the variable limiter 9a does not produce any output during this period. During a period T from time t2 to time t3 when the difference between the current and previous power command values A is positive, the lower limit of the limit range of the variable limiter 9a is set at a value equal to or close to zero, so that the output of the variable limiter 9a is valued only in a positive direction. Then, during a period from t3 onward when the difference between the current and previous power command values A has a value equal to or close to zero, the upper and lower limits are set at values equal to or close to zero, so that the output of the variable limiter 9a is absent. As thus far discussed, the variable limiter controller 10a provided in the differential output control unit 3002a determines the difference between the power command value A specifying the AC output at the current time and the power command value A specifying the AC output at a previous time and controls the upper and lower limits of the limit range of the variable limiter 9a according to the aforementioned difference. Then, the variable limiter 9a produces only such an output chosen from among outputs dA2 of the second differentiator 6a that occurs during the period T when the difference between the current and previous power command values A varies in a positive direction, the output of the variable limiter 9a having a polarity corresponding to the direction of change in the power command value A. Subsequently, the adder 7 adds the output M of the variable limiter 9a to the guide vane opening command value G to thereby generate the guide vane control command value H which is a control target value. This means that it is possible to increase the guide vane control command value H at a point in time when the difference between the current and previous power command values A begins to occur, or at the beginning of the change in the power command value A. Also, it is possible to eliminate an undesirable command value which might have occurred at or after a point in time when the change in the power command value A has completed. Then, as the power generation system control apparatus 100 performs revolving speed control by using the servo control system signal S obtained by adding the revolving speed control signal F to the guide vane control signal L which indicates a control error, it is possible to suppress undesirable fluctuations in the guide vane opening that could occur at or after time t3 which is the point in time when the change in the power command value A completes as shown in FIG. 8F. It is also possible to keep the variable range of the revolving speed to +3% as in the first embodiment and, therefore, a reduction in the revolving speed can be suppressed to a range falling within the variable speed range of ±4%.

FIGS. 9A-9F depicting the case where the power command value A is decreased correspond respectively to FIGS. 8A-8F depicting the above-described case where the power command value A is increased. Although values shown in FIGS. 9A-9F are in directions opposite to the directions shown in the case of the increased power command value, operations in individual steps are the same, so that a full description is not provided herein.

A reason why the values shown in FIG. 9E are only in a negative direction unlike the case shown in FIG. 8E is that the variable limiter controller 10a sets the upper limit of the limit range of the variable limiter 9a at a value equal to or close to zero and the lower limit of the limit range at a value which does not limit the output dA2 of the second differentiator 6a during the period T from time t2 to time t3 when the difference between the current and previous power command values A is negative. Even in the case where the power command value A is decreased, it is possible to suppress undesirable fluctuations in the guide vane opening that could occur at or after time t3 which is a point in time when the change in the power command value A completes as shown in FIG. 9F. It is also possible to keep the variable range of the revolving speed to -3% as in the first embodiment and, therefore, an increase in the revolving speed can be suppressed to a range falling within the variable speed range of ±4%.

While the third embodiment has been described as employing the differentiation circuit section 3001a in which the differential output control unit 3002a is provided, this configuration may be modified such that the differential output control unit 3002a is not provided as in the first embodiment.

### FOURTH EMBODIMENT

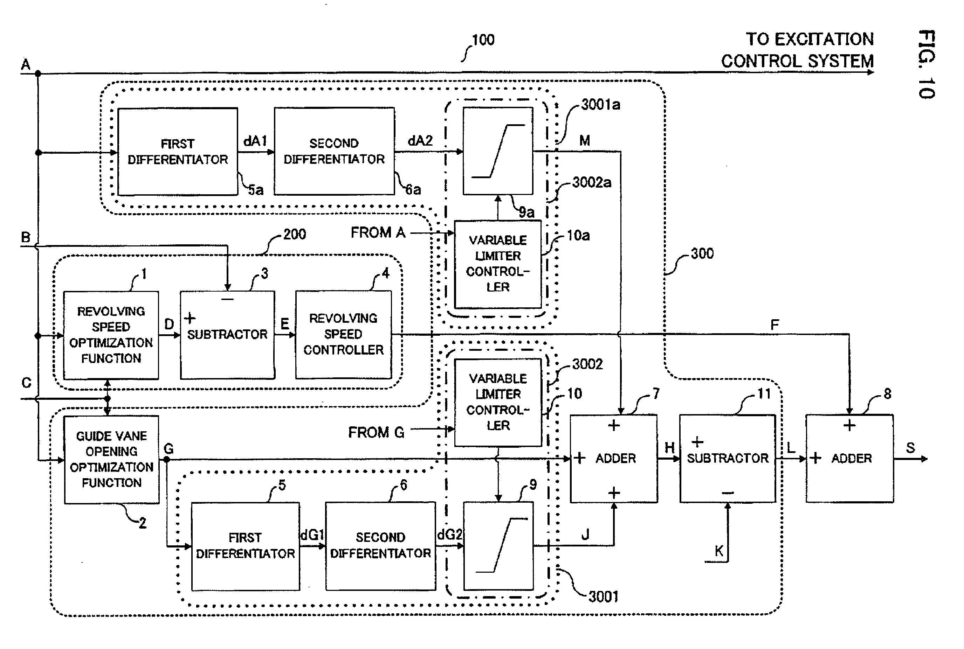

The configuration of a power generation system control apparatus 100 according to the fourth embodiment of the invention is now described with reference to FIG. 10.

The power generation system control apparatus 100 of the fourth embodiment includes a guide vane control signal generator 300 which is provided with both the differentiation circuit configuration of the foregoing second embodiment shown in FIG. 4 and the differentiation circuit configuration of the foregoing third embodiment shown in FIG. 7. Specifically, an adder 7 generates a guide vane control command value H by adding a variable limiter output J output from a variable limiter 9 of a first differential output control unit 3002 provided in a first differentiation circuit section 3001 which receives a guide vane opening command value G as an input value, a variable limiter output M output from a variable limiter 9a of a second differential output control unit 3002a provided in a second differentiation circuit section 3001a which receives a power command value A as an input value, and the guide vane opening command value G. As the configuration of the fourth embodiment is otherwise the same as described in the foregoing second and third embodiments, a full description of the configuration is not provided herein.

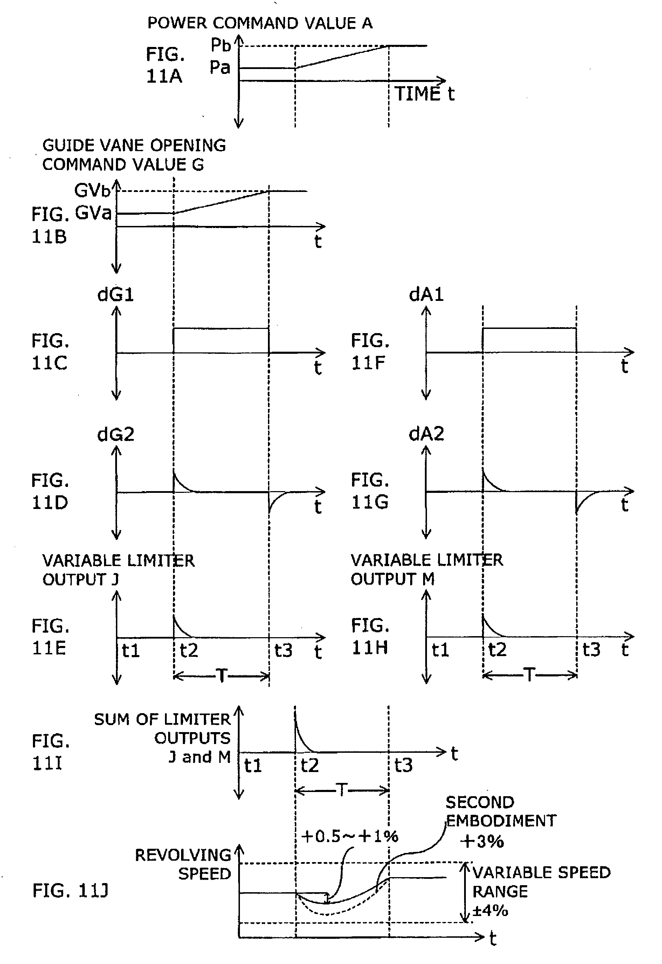

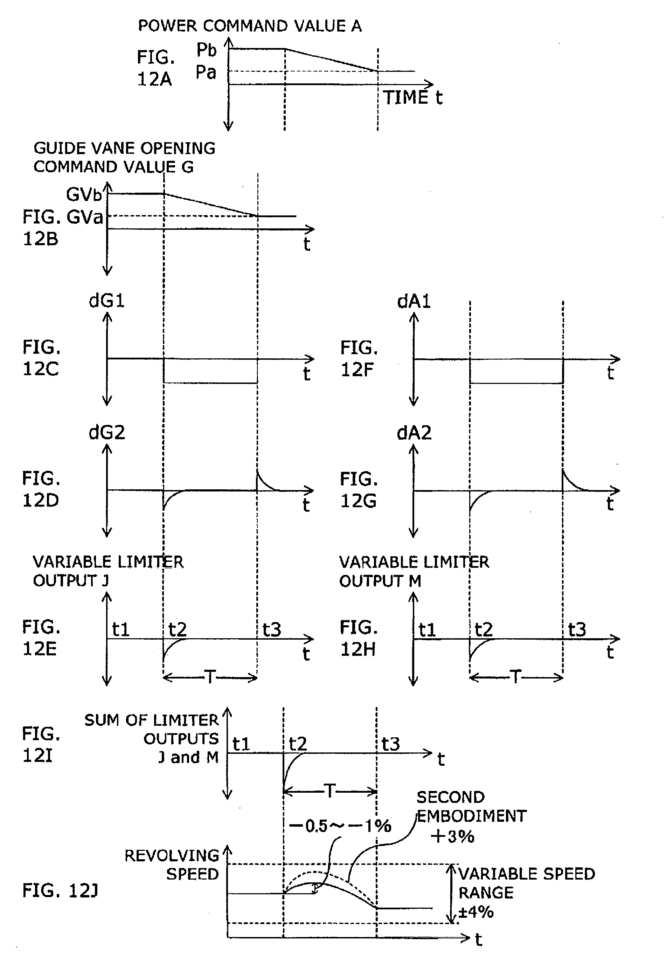

Now, the working of the power generation system control apparatus 100 according to the fourth embodiment is described with reference to FIGS. 11A-11J and 12A-12J.

FIGS. 11A-11E and FIGS. 12A-12E depict the same operating steps as described in the foregoing second embodiment shown in FIGS. 5A-5E and FIGS. 6A-6E, respectively, and FIGS. 11F-11H and FIGS. 12F-12H depict the same operating steps as described in the foregoing third embodiment shown in FIGS. 8C-8E and FIGS. 9C-9E, respectively.

A case where the power command value A is increased is briefly described with reference to FIGS. 11A-11J. A variable limiter controller 10 provided in the first differential output control unit 3002 controls the variable limiter 9 by performing the same operation as discussed in the second embodiment and the variable limiter 9 which limits the output value dG2 of the second differentiator 6 to a specific output range produces the output J. On the other hand, the variable limiter controller 10a provided in the second differential output control unit 3002a controls the variable limiter 9a by performing the same operation as discussed in the third embodiment and the variable limiter 9a which limits the output value dA2 of the second differentiator 6a to a specific output range produces the output M. As the outputs J and M of the two variable limiters 9, 9a are added together, there is produced a combined limiter output (i.e., the sum of J and M) whose value is increased in a positive direction as shown in FIG. 11I. The adder 7 adds the sum of the outputs J and M of the variable limiters 9, 9a to the guide vane opening command value G to thereby generate the guide vane control command value H which is a control target value. This means that it is possible to increase the guide vane control command value H at the beginning of the change in the power command value A and eliminate an undesirable command value which might have occurred at or after a point in time when the change in the power command value A has completed. As the power generation system control apparatus 100 performs revolving speed control by using the servo control system signal S obtained by adding the revolving speed control signal F to the guide vane control signal L which is obtained by subtracting the true guide vane opening K from the guide vane control command value H generated in the aforementioned manner, follow-up performance of the guide vanes is enhanced. As a result, a reduction in the revolving speed is kept to a level not exceeding +1.0% as shown in FIG. 11J even in the event of a rapid change in the power command value A and, thus, the fourth embodiment is effective for more suppressing the reduction in the revolving speed than the above-described second embodiment. Also, it is possible to suppress undesirable fluctuations in the guide vane opening that could occur at or after time t3 which is the point in time when the change in the power command value A completes.

FIGS. 12A-12J depicting a case where the power command value A is decreased correspond respectively to FIGS. 11A-11J depicting the above-described case where the power command value A is increased. Although values shown in FIGS. 12A-12J are in directions opposite to the directions shown in the case of the increased power command value, operations in individual steps are the same as already discussed in the foregoing second and third embodiments, so that a full description is not provided herein.

As the outputs J and M of the two variable limiters 9, 9a are added together, there is produced a combined limiter output (i.e., the sum of J and M) whose value is increased in a negative direction as shown in FIG. 12I. The adder 7 adds the sum of the outputs J and M of the variable limiters 9, 9a to the guide vane opening command value G to thereby generate the guide vane control command value H which is a control target value. This means that it is possible to increase the guide vane control command value H at the beginning of a change in the power command value A and eliminate an undesirable command value which might have occurred at or after a point in time when the change in the power command value A has completed. As the power generation system control apparatus 100 performs revolving speed control by using the servo control system signal S obtained by adding the revolving speed control signal F to the guide vane control signal L which is obtained by subtracting the true guide vane opening K from the guide vane control command value H generated in the aforementioned manner, the follow-up performance of the guide vanes is enhanced. As a result, an increase in the revolving speed is kept to a level not exceeding -1.0% as shown in FIG. 12J even in the event of a rapid change in the power command value A and, thus, the fourth embodiment is effective for more suppressing the increase in the revolving speed than the above-described second embodiment.

### FIFTH EMBODIMENT

A power generation system control apparatus 100 according to the fifth embodiment of the invention is now described.

While the power generation system control apparatus 100 of the fifth embodiment has the same configuration as that of the fourth embodiment shown in FIG. 10, the former differs from the latter in the following points. In the foregoing fourth embodiment, the second differentiator 6 provided in the first differentiation circuit section 3001 and the second differentiator 6a provided in the second differentiation circuit section 3001a together constituting part of the guide vane control signal generator 300 are configured to carry out essentially the same derivative control method. In contrast, the power generation system control apparatus 100 of the fifth embodiment is configured such that the second differentiator 6 provided in the first differentiation circuit section 3001 and the second differentiator 6a provided in the second differentiation circuit section 3001a carry out different control methods.

Specifically, the second differentiator 6 provided in the first differentiation circuit section 3001 which receives the guide vane opening command value G as an input value has an increased circuit gain so as to increase the level of the output dG2 of the second differentiator 6 and the second differentiator 6a provided in the second differentiation circuit section 3001a which receives the power command value A as an input value has an increased circuit time constant so as to lengthen an output period of the output dA2 of the second differentiator 6a. This arrangement makes it possible to further increase the amount of control of the guide vanes and more suppress fluctuations in the revolving speed.

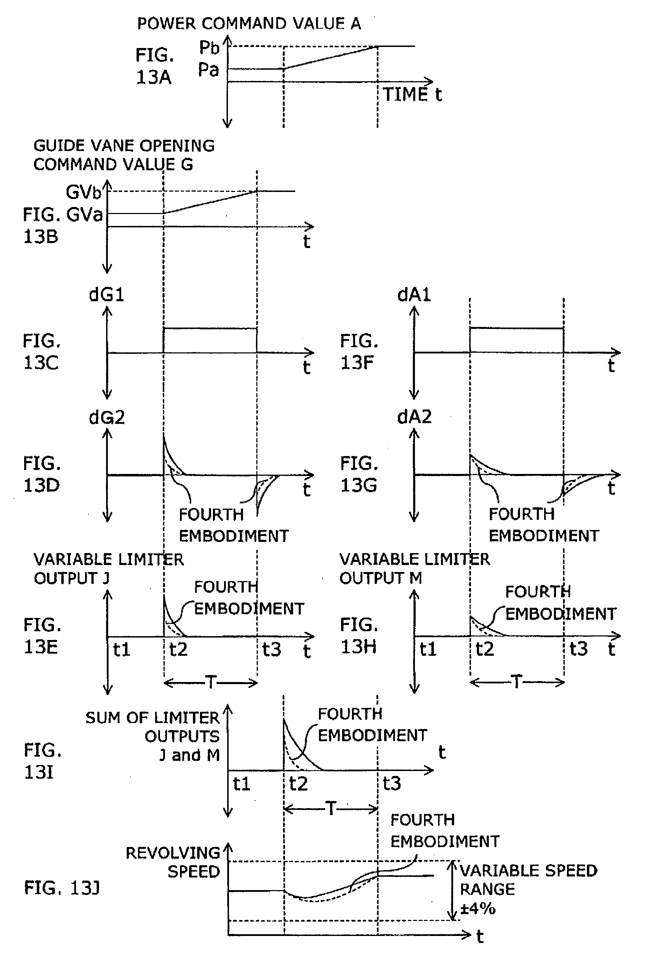

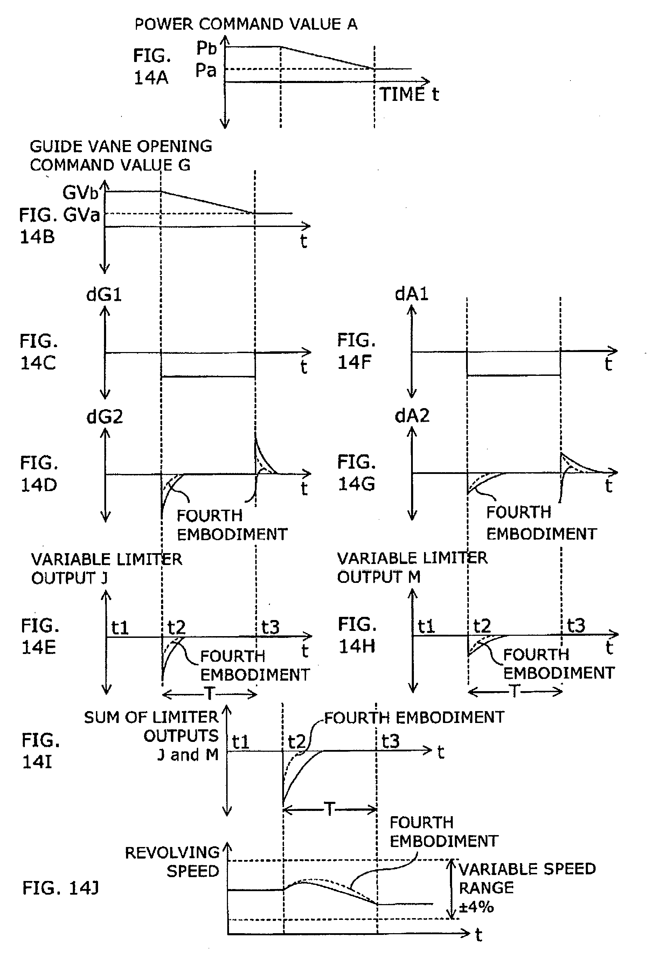

Now, the working of the power generation system control apparatus 100 according to the fifth embodiment is described with reference to FIGS. 13A-13J and 14A-14J.

Discussed below is a case where the power command value A is increased. FIGS. 13A-13C and 13F are the same as FIGS. 11A-11C and IIF depicting operations performed in the foregoing fourth embodiment, so that a full description is not provided herein. In this embodiment, the second differentiator 6 provided in the first differentiation circuit section 3001 which receives the guide vane opening command value G as the input value outputs the differential dG2 whose value is made larger than in the fourth embodiment as shown in FIG. 13D. The variable limiter 9 provided in the first differentiation circuit section 3001 generates a positive output only during a period T from time t2 to time t3 when a change in the power command value A is positive and, therefore, a positive limiter output J having a sharper shape than in the above-described fourth embodiment is obtained as shown in FIG. 13E.

On the other hand, the second differentiator 6a provided in the second differentiation circuit section 3001a which receives the power command value A as the input value outputs the differential dA2 whose differential output period is prolonged as shown in FIG. 13G. The variable limiter 9a provided in the second differentiation circuit section 3001a generates a positive output having a longer shape than in the above-described fourth embodiment during the period T from time t2 to time t3 when the difference between current and previous power command values A is positive, so that a variable limiter output M as shown in FIG. 13H is obtained. As the outputs J and M of the two variable limiters 9, 9a are added together, there is produced a combined limiter output (i.e., the sum of J and M) having an enlarged value and a prolonged output period as compared to the fourth embodiment as shown in FIG. 13I. The adder 7 adds the sum of the outputs J and M of the variable limiters 9, 9a to the guide vane opening command value G to thereby generate the guide vane control command value H which is a control target value. This means that it is possible to further increase the guide vane control command value H at the beginning of the change in the power command value A than in the foregoing first to fourth embodiments and eliminate an undesirable command value which might have occurred at or after a point in time when the change in the power command value A has completed. Then, as the power generation system control apparatus 100 performs revolving speed control by using the servo control system signal S obtained by adding the revolving speed control signal F to the guide vane control signal L which indicates a control error, the follow-up performance of the guide vanes is further enhanced. Therefore, the fifth embodiment is effective for more suppressing the reduction in the revolving speed than the above-described fourth embodiment as shown in FIG. 13J even in the event of a rapid change in the power command value A. Also, it is possible to suppress undesirable fluctuations in the guide vane opening that could occur at or after time t3 which is the point in time when the change in the power command value A completes.

FIGS. 14A-14J depicting a case where the power command value A is decreased correspond respectively to FIGS. 13A-13J depicting the above-described case where the power command value A is increased. Although values shown in FIGS. 14A-14J are in directions opposite to the directions shown in the case of the increased power command value, operations in individual steps are the same, so that a full description is not provided herein.

Since the outputs J and M of the two variable limiters 9, 9a are added together, there is produced a combined limiter output (i.e., the sum of J and M) having an enlarged negative value and a prolonged output period as compared to the fourth embodiment as shown in FIG. 14I. Therefore, the guide vane control signal L obtained from the guide vane control signal generator 300 produces an increased amount of control of the guide vanes. This makes it possible to more suppress an increase in the revolving speed than in the above-described fourth embodiment as shown in FIG. 14J.

While the differentials dG2 and dA2 output from the two second differentiators 6, 6a in the fifth embodiment have been described in comparison with those produced in the fourth embodiment, the individual second differentiators 6, 6a of the fifth embodiment may be set in such a manner that the differential dG2 has a larger value than the differential dA2 and the differential dA2 has a more prolonged output period than the differential dG2.

The power generation system control apparatus 100 of the above-described fifth embodiment is configured such that the second differentiator 6 provided in the first differentiation circuit section 3001 which receives the guide vane opening command value G as the input value has an increased circuit gain and the second differentiator 6a provided in the second differentiation circuit section 3001a which receives the power command value A as the input value has an increased circuit time constant. This configuration may be modified such that the second differentiator 6 of the first differentiation circuit section 3001 has an increased circuit time constant and the second differentiator 6a of the second differentiation circuit section 3001a has an increased circuit gain, conversely, yet producing the same advantageous effects as thus far described. Additionally, although the differentials dG2 and dA2 output from the two second differentiators 6, 6a can be set in comparison with those produced in the fourth embodiment, the individual second differentiators 6, 6a may be set in such a manner that the differential dG2 has a more prolonged output period than the differential dA2 and the differential dA2 has a has a larger value than the differential dG2 in the case of the aforementioned modified configuration as well.

This invention is applicable to a control apparatus for a power generation system of an adjustable-speed, pumped-storage power plant.

Various modifications and alterations of this invention will be apparent to those skilled in the art without departing from the scope of this invention, and it should be understood that this is not limited to the illustrative embodiments set forth herein.

## Claims

1. A power generation system control apparatus (100) for an adjustable-speed, pumped-storage power plant, said power generation system control apparatus (100) comprising:
a revolving speed control signal generator (200) for calculating a revolving speed command value (D) on the basis of a power command value (A) and an effective head (C) of a pump turbine and generating a revolving speed control signal (F) on the basis of a deviation (E) between the revolving speed command value (D) and a true revolving speed (B) of the pump turbine;
a guide vane control signal generator (300) for calculating a guide vane control command value (H) on the basis of the power command value (A) and the effective head (C) of the pump turbine and generating a guide vane control signal (L) by subtracting a true guide vane opening (K) from the guide vane control command value (H); and
an adder (8) for generating a servo control system signal (S) by adding the revolving speed control signal (F) and the guide vane control signal (L);
wherein said revolving speed control signal generator (200) includes a revolving speed optimization function (1) for calculating the revolving speed command value (D) on the basis of the power command value (A) and the effective head (C) of the pump turbine, and said guide vane control signal generator (300) includes a guide vane opening optimization function (2) for calculating a guide vane opening command value (G) on the basis of the power command value (A) and the effective head (C) of the pump turbine, a differentiation circuit section (3001) for performing two-step differentiation of a value which is based on the power command value (A), and an adder (7) which adds an output of said differentiation circuit section (3001) to the guide vane opening command value (G) and outputs the guide vane control command value (H) thus obtained.

2. The power generation system control apparatus (100) for the adjustable-speed, pumped-storage power plant according to claim 1, wherein the value (G, A) which is based on the power command value (A) is input into said differentiation circuit section (3001), said differentiation circuit section (3001) including a first differentiator (5, 5a) which differentiates the value input into said differentiation circuit section (3001) and a second differentiator (6, 6a) which differentiates an output (dG1, dA1) of the first differentiator (5, 5a).

3. The power generation system control apparatus (100) for the adjustable-speed, pumped-storage power plant according to either of claims 1 or 2, in particular claim 2, wherein said differentiation circuit section (3001) includes a differential output control unit (3002, 3002a) for controlling an output (dG2, dA2) of the second differentiator (6, 6a).

4. The power generation system control apparatus (100) for the adjustable-speed, pumped-storage power plant according to any one of the preceding claims, in particular claim 3, wherein said differential output control unit (3002, 3002a) includes a variable limiter (9, 9a) for limiting the output (dG2, dA2) of the second differentiator (6, 6a) and a variable limiter controller (10, 10a) for controlling a limit range of the variable limiter (9, 9a).

5. The power generation system control apparatus (100) for the adjustable-speed, pumped-storage power plant according to any one of the preceding claims, in particular to one of claims 2 to 4, wherein a value input into the first differentiator (5) of said differentiation circuit section (3001) is the guide vane opening command value (G).

6. The power generation system control apparatus (100) for the adjustable-speed, pumped-storage power plant according to any one of the preceding claims, in particular claim 4, wherein a value input into the first differentiator (5) of said differentiation circuit section (3001) is the guide vane opening command value (G), and said variable limiter controller (10) controls the limit range of the variable limiter (9) in such a manner that the variable limiter (9) produces only such an output (J) chosen from among outputs (dG2) of the second differentiator (6) that occurs during a period when the guide vane opening command value (G) varies, the output (J) of the variable limiter (9) having a polarity corresponding to a direction of change in the guide vane opening command value (G).

7. The power generation system control apparatus (100) for the adjustable-speed, pumped-storage power plant according to any one of the preceding claims, in particular one of claims 2 to 4, wherein a value input into the first differentiator (5a) of said differentiation circuit section (3001) is the power command value (A).

8. The power generation system control apparatus (100) for the adjustable-speed, pumped-storage power plant according to any one of preceding claims, in particular claim 4, wherein a value input into the first differentiator (5a) of said differentiation circuit section (3001) is the power command value (A), and said variable limiter controller (10a) controls the limit range of the variable limiter (9a) in such a manner that the variable limiter (9a) produces only such an output (M) chosen from among outputs (dA2) of the second differentiator (6a) that occurs during a period when the power command value (A) varies according to a difference between current and previous power command values (A), the output (M) of the variable limiter (9a) having a polarity corresponding to a direction of change in the power command value (A).

9. The power generation system control apparatus (100) for the adjustable-speed, pumped-storage power plant according to any one of the receding claims, wherein said guide vane control signal generator (300) includes a first differentiation circuit (3001) and a second differentiation circuit (3001a), each constituting part of said differentiation circuit section (3001), said first differentiation circuit (3001) including a first differentiator (5) which differentiates the guide vane opening command value (G) and a second differentiator (6) which differentiates an output (dG1) of the first differentiator (5), and said second differentiation circuit (3001a) including a first differentiator (5a) which differentiates the power command value (A) and a second differentiator (6a) which differentiates an output (dA1) of the first differentiator (5a).

10. The power generation system control apparatus (100) for the adjustable-speed, pumped-storage power plant according to any one of the preceding claims, in particular claim 9, wherein at least one of said first differentiation circuit (3001) and said second differentiation circuit (3001a) includes a differential output control unit (3002, 3002a) for controlling an output (dG2, dA2) of the second differentiator (6, 6a).

11. The power generation system control apparatus (100) for the adjustable-speed, pumped-storage power plant according to any one of the preceding claims, in particular claim 10, wherein said differential output control unit (3002, 3002a) includes a variable limiter (9, 9a) for limiting the output (dG2, dA2) of the second differentiator (6, 6a) and a variable limiter controller (10, 10a) for controlling a limit range of the variable limiter (9, 9a).

12. The power generation system control apparatus (100) for the adjustable-speed, pumped-storage power plant according to any one of the preceding claims, in particular claim 11, wherein said variable limiter controller (10) provided in said first differentiation circuit (3001) controls the limit range of the variable limiter (9) in such a manner that the variable limiter (9) produces only such an output (J) chosen from among outputs (dG2) of the second differentiator (6) that occurs during a period when the guide vane opening command value (G) varies, the output (J) of the variable limiter (9) having a polarity corresponding to a direction of change in the guide vane opening command value (G).

13. The power generation system control apparatus (100) for the adjustable-speed, pumped-storage power plant according to any one of the preceding claims, in particular claim 11, wherein said variable limiter controller (10a) controls the limit range of the variable limiter (9a) in such a manner that the variable limiter (9a) produces only such an output (M) chosen from among outputs (dA2) of the second differentiator (6a) that occurs during a period when the power command value (A) varies according to a difference between current and previous power command values (A), the output (M) of the variable limiter (9a) having a polarity corresponding to a direction of change in the power command value (A).

14. The power generation system control apparatus (100) for the adjustable-speed, pumped-storage power plant according to any one of the preceding claims, in particular to one of claims 9 to 13, wherein the second differentiator (6, 6a) of one of the first and second differentiation circuits (3001, 3001a) has a larger circuit gain so that the output (dG2, dA2) of the second differentiator (6, 6a) of said one of the first and second differentiation circuits (3001, 3001a) has a greater value than the second differentiator (6, 6a) of the other of the first and second differentiation circuits (3001, 3001a), and the second differentiator (6, 6a) of said other of the first and second differentiation circuits (3001, 3001a) has a larger circuit time constant so that the output (dG2, dA2) of the second differentiator (6, 6a) of said other of the first and second differentiation circuits (3001, 3001a) has a longer output period than the second differentiator (6, 6a) of said one of the first and second differentiation circuits (3001, 3001a).

## Patentansprüche

1. Energieerzeugungssystemsteuerungsvorrichtung (100) für ein drehzahlregulierbares Pumpspeicherkraftwerk, wobei die Energieerzeugungssystemsteuerungsvorrichtung (100) aufweist:
einen Drehzahlsteuersignalgeber (200), um einen Drehzahlsollwert (D) auf Grundlage eines Energiesollwerts (A) und eines wirksamen Kopfs (C) einer Pumpturbine zu berechnen und ein Drehzahlsteuersignal (F) auf Grundlage einer Abweichung (E) zwischen dem Drehzahlsollwert (D) und einer wirklichen Drehzahl (B) der Pumpturbine zu erzeugen;
einen Leitschaufelsteuersignalgeber (300), um einen Leitschaufelsteuersollwert (H) auf Grundlage des Energiesollwerts (A) und des wirksamen Kopfs (C) der Pumpturbine zu berechnen und ein Leitschaufelsteuersignals (L) zu erzeugen, indem eine wirkliche Leitschaufelöffnung (K) vom Leitschaufelsteuersollwert (H) subtrahiert wird; und
ein Addierglied (8), um ein Servosteuerungssystemsignal (S) zu erzeugen, indem das Drehzahlsteuersignal (F) und das Leitschaufelsteuersignal (L) addiert werden;
wobei der Drehzahlsteuersignalgeber (200) eine Drehzahloptimierungsfunktion (1) umfasst, um den Drehzahlsollwert (D) auf Grundlage des Energiesollwerts (A) und des wirksamen Kopfs (C) der Pumpturbine zu berechnen, und der Leitschaufelsteuersignalgeber (300) eine Leitschaufelöffnungsoptimierungsfunktion (2) umfasst, um einen Leitschaufelöffnungssollwert (G) auf Grundlage des Energiesollwerts (A) und des wirksamen Kopfs (C) der Pumpturbine zu berechnen, einen Differenzierungsschaltungsabschnitt (3001), um eine Zweischrittdifferenzierung eines Werts durchzuführen, der auf dem Energiesollwert (A) beruht, und ein Addierglied (7), das einen Ausgang des Differenzierungsschaltungsabschnitts (3001) zum Leitschaufelöffnungssollwert (G) addiert und den so erhaltenen Leitschaufelsteuersollwert (H) ausgibt.

2. Energieerzeugungssystemsteuerungsvorrichtung (100) für das drehzahlregulierbare Pumpspeicherkraftwerk nach Anspruch 1, wobei der Wert (G, A), der auf dem Energiesollwert (A) beruht, in den Differenzierungsschaltungsabschnitt (3001) eingegeben wird, wobei der Differenzierungsschaltungsabschnitt (3001) ein erstes Differenzierglied (5, 5a), das den in den Differenzierungsschaltungsabschnitt (3001) eingegebenen Wert differenziert, und ein zweites Differenzierglied (6, 6a) umfasst, das einen Ausgang (dG1, dA1) des ersten Differenzierglieds (5, 5a) differenziert.

3. Energieerzeugungssystemsteuerungsvorrichtung (100) für das drehzahlregulierbare Pumpspeicherkraftwerk nach einem der Ansprüche 1 oder 2, insbesondere Anspruch 2, wobei der Differenzierungsschaltungsabschnitt (3001) eine Differenzausgangssteuereinheit (3002, 3002a) umfasst, um einen Ausgang (dG2, dA2) des zweiten Differenzierglieds (6, 6a) zu steuern.

4. Energieerzeugungssystemsteuerungsvorrichtung (100) für das drehzahlregulierbare Pumpspeicherkraftwerk nach einem der vorhergehenden Ansprüche, insbesondere Anspruch 3, wobei die Differenzausgangssteuereinheit (3002, 3002a) ein variables Begrenzungsglied (9, 9a), um den Ausgang (dG2, dA2) des zweiten Differenzierglieds (6, 6a) zu begrenzen, und ein Steuerteil (10, 10a) für das variable Begrenzungsglied umfasst, um einen Begrenzungsbereich des variablen Begrenzungsglieds (9, 9a) zu steuern.

5. Energieerzeugungssystemsteuerungsvorrichtung (100) für das drehzahlregulierbare Pumpspeicherkraftwerk nach einem der vorhergehenden Ansprüche, insbesondere nach einem der Ansprüche 2 bis 4, wobei es sich bei einem in das erste Differenzierglied (5) des Differenzierungsschaltungsabschnitts (3001) eingegebenen Wert um den Leitschaufelöffnungssollwert (G) handelt.

6. Energieerzeugungssystemsteuerungsvorrichtung (100) für das drehzahlregulierbare Pumpspeicherkraftwerk nach einem der vorhergehenden Ansprüche, insbesondere Anspruch 4, wobei es sich bei einem in das erste Differenzierglied (5) des Differenzierungsschaltungsabschnitts (3001) eingegebenen Wert um den Leitschaufelöffnungssollwert (G) handelt, und das Steuerteil (10) für das variable Begrenzungsglied den Grenzbereich des variablen Begrenzungsglieds (9) so steuert, dass das variable Begrenzungsglied (9) nur einen solchen Ausgang (J) erzeugt, der aus Ausgängen (dG2) des zweiten Differenzierglieds (6) ausgewählt ist, der während eines Zeitraums auftritt, in dem sich der Leitschaufelöffnungssollwert (G) verändert, wobei der Ausgang (J) des variablen Begrenzungsglieds (9) eine Polarität hat, die einer Veränderungsrichtung des Leitschaufelöffnungssollwerts (G) entspricht.

7. Energieerzeugungssystemsteuerungsvorrichtung (100) für das drehzahlregulierbare Pumpspeicherkraftwerk nach einem der vorhergehenden Ansprüche, insbesondere nach einem der Ansprüche 2 bis 4, wobei es sich bei einem in das Differenzierglied (5a) des Differenzierungsschaltungsabschnitts (3001) eingegebenen Wert um den Energiesollwert (A) handelt.

8. Energieerzeugungssystemsteuerungsvorrichtung (100) für das drehzahlregulierbare Pumpspeicherkraftwerk nach einem der vorhergehenden Ansprüche, insbesondere Anspruch 4, wobei es sich bei einem in das Differenzierglied (5a) des Differenzierungsschaltungsabschnitts (3001) eingegebenen Wert um den Energiesollwert (A) handelt und das Steuerteil (10a) des variablen Begrenzungsglieds den Grenzbereich des variablen Begrenzungslieds (9a) so steuert, dass das variable Begrenzungsglied (9a) nur einem solchen Ausgang (M) erzeugt, der aus Ausgängen (dA2) des zweiten Differenzierglieds (6a) ausgewählt ist, der während eines Zeitraums auftritt, in dem sich der Energiesollwert (A) entsprechend einer Differenz zwischen aktuellen und vorherigen Energiesollwerten (A) verändert, wobei der Ausgang (M) des variablen Begrenzungsglieds (9a) eine Polarität hat, die einer Veränderungsrichtung des Energiesollwerts (A) entspricht.

9. Energieerzeugungssystemsteuerungsvorrichtung (100) für das drehzahlregulierbare Pumpspeicherkraftwerk nach einem der vorhergehenden Ansprüche, wobei der Leitschaufelsteuersignalgeber (300) eine erste Differenzierungsschaltung (3001) und eine zweite Differenzierungsschaltung (3001a) umfasst, die jeweils einen Teil des Differenzierungsschaltungsabschnitts (3001) bilden, wobei die erste Differenzierungsschaltung (3001) ein erstes Differenzierglied (5), das den Leitschaufelöffnungssollwert (G) differenziert, und ein zweites Differenzierglied (6) umfasst, das einen Ausgang (dG1) des ersten Differenzierglieds (5) differenziert, und wobei die zweite Differenzierungsschaltung (3001a) ein erstes Differenzierglied (5a), das den Energiesollwert (A) differenziert, und in zweites Differenzierglied (6a) umfasst, das einen Ausgang (dA1) des ersten Differenzierglieds (5a) differenziert.

10. Energieerzeugungssystemsteuerungsvorrichtung (100) für das drehzahlregulierbare Pumpspeicherkraftwerk nach einem der vorhergehenden Ansprüche, insbesondere Anspruch 9, wobei die erste Differenzierungsschaltung (3001) und/oder die zweite Differenzierungsschaltung (3001a) eine Differenzausgangssteuerschaltung (3002, 3002a) umfassen/umfasst, um einen Ausgang (dG2, dA2) des zweiten Differenzierglieds (6, 6a) zu steuern.

11. Energieerzeugungssystemsteuerungsvorrichtung (100) für das drehzahlregulierbare Pumpspeicherkraftwerk nach einem der vorhergehenden Ansprüche, insbesondere Anspruch 10, wobei die Differenzausgangssteuerschaltung (3002, 3002a) ein variables Begrenzungsglied (9, 9a), um den Ausgang (dG2, dA2) des zweiten Differenzierglieds (6, 6a) zu begrenzen, und ein Steuerteil (10, 10a) für das variable Begrenzungsglied umfasst, um einen Grenzbereich des variablen Begrenzungsglieds (9, 9a) zu steuern.

12. Energieerzeugungssystemsteuerungsvorrichtung (100) für das drehzahlregulierbare Pumpspeicherkraftwerk nach einem der vorhergehenden Ansprüche, insbesondere Anspruch 11, wobei das Steuerteil (10) für das variable Begrenzungsglied, das in der ersten Differenzierungsschaltung (3001) vorgesehen ist, den Grenzbereich des variablen Begrenzungsglieds (9) so steuert, das das variable Begrenzungsglied (9) nur einen solchen Ausgang (J) erzeugt, der aus Ausgängen (dG2) des zweiten Differenzierglieds (6) ausgewählt ist, der während eines Zeitraums auftritt, in dem sich der Leitschaufelöffnungssollwert (G) verändert, wobei der Ausgang (J) des variablen Begrenzungsglieds (9) eine Polarität hat, die einer Veränderungsrichtung des Leitschaufelöffnungssollwerts (G) entspricht.

13. Energieerzeugungssystemsteuerungsvorrichtung (100) für das drehzahlregulierbare Pumpspeicherkraftwerk nach einem der vorhergehenden Ansprüche, insbesondere Anspruch 11, wobei das Steuerteil (10a) für das variable Begrenzungsglied den Grenzbereich des variablen Begrenzungsglieds (9a) so steuert, dass das variable Begrenzungsglied (9a) nur einen solchen Ausgang (M) erzeugt, der aus Ausgängen (dA2) des zweiten Differenzierglieds (6a) ausgewählt ist, der während eines Zeitraums auftritt, in dem sich der Energiesollwert (A) entsprechend einer Differenz zwischen aktuellen und vorherigen Energiesollwerten (A) verändert, wobei der Ausgang (M) des variablen Begrenzungsglieds (9a) eine Polarität hat, die einer Veränderungsrichtung des Energiesollwerst (A) entspricht.

14. Energieerzeugungssystemsteuerungsvorrichtung (100) für das drehzahlregulierbare Pumpspeicherkraftwerk nach einem der vorhergehenden Ansprüche, insbesondere einem der Ansprüche 9 bis 13, wobei das zweite Differenzierglied (6, 6a) einer der ersten oder zweiten Differenzierschaltung (3001, 3001a) eine größere Schaltungsverstärkung besitzt, so dass der Ausgang (dG2, dA2) des zweiten Differenzierglieds (6, 6a) der einen ersten oder zweiten Differenzierschaltung (3001, 3001a) einen größeren Wert hat als das zweite Differenzierglied (6, 6a) der jeweils anderen ersten oder zweiten Differenzierschaltung (3001, 3001a), und das zweite Differenzierglied (6, 6a) der jeweils anderen ersten oder zweiten Differenzierschaltung (3001, 3001a) eine größere Schaltungszeitkonstante besitzt, so dass der Ausgang (dG2, dA2) des zweiten Differenzierglieds (6, 6a) der jeweils anderen ersten oder zweiten Differenzierschaltung (3001, 3001a) einen längeren Ausgangszeitraum hat als das zweite Differenzierglied (6, 6a) der jeweils einen ersten oder zweiten Differenzierschaltung (3001, 3001a).

## Revendications

1. Appareil de commande de système de génération d'énergie (100) pour une usine de pompage à vitesse ajustable, ledit appareil de commande de système de génération d'énergie (100) comprenant :
un générateur de signal de commande de vitesse de rotation (200) pour calculer une valeur de commande de vitesse de rotation (D) sur la base d'une valeur de commande de puissance (A) et d'une hauteur d'élévation nette (C) d'une turbine de pompe et pour générer un signal de commande de vitesse de rotation (F) sur la base d'un écart (E) entre la valeur de commande de vitesse de rotation (D) et une vitesse de rotation vraie (B) de la turbine de pompe ;
un générateur de signal de commande d'aube directrice (300) pour calculer une valeur de commande de contrôle d'aube directrice (H) sur la base de la valeur de commande de puissance (A) et de la hauteur d'élévation nette (C) de la turbine de pompe et pour générer un signal de commande d'aube directrice (L) en soustrayant une ouverture d'aube directrice vraie (K) à la valeur de commande de contrôle d'aube directrice (H) ; et
un additionneur (8) pour générer un signal de système d'asservissement (S) en additionnant le signal de commande de vitesse de rotation (F) et le signal de commande d'aube directrice (L) ;
dans lequel ledit générateur de signal de commande de vitesse de rotation (200) comprend une fonction d'optimisation de vitesse de rotation (1) pour calculer la valeur de commande de vitesse de rotation (D) sur la base de la valeur de commande de puissance (A) et de la hauteur d'élévation nette (C) de la turbine de pompe, et ledit générateur de signal de commande d'aube directrice (300) comprend une fonction d'optimisation (2) d'ouverture d'aube directrice pour calculer une valeur de commande d'ouverture d'aube directrice (G) sur la base de la valeur de commande de puissance (A) et de la hauteur d'élévation nette (C) de la turbine de pompe, une section de circuit de différentiation (3001) pour effectuer une différentiation en deux étapes d'une valeur qui est basée sur la valeur de commande de puissance (A), et un additionneur (7) qui ajoute une sortie de ladite section de circuit de différentiation (3001) à la valeur de commande d'ouverture d'aube directrice (G) et qui délivre en sortie la valeur de commande de contrôle d'aube directrice (H) ainsi obtenue.

2. Appareil de commande de système de génération d'énergie (100) pour l'usine de pompage à vitesse ajustable selon la revendication 1, dans lequel la valeur (G, A) qui est basée sur la valeur de commande de puissance (A) est appliquée en entrée de ladite section de circuit de différentiation (3001), ladite section de circuit de différentiation (3001) comprenant un premier différenciateur (5, 5a) qui différentie la valeur appliquée à ladite section de circuit de différentiation (3001) et un second différenciateur (6, 6a) qui différentie une sortie (dG1, dA1) du premier différenciateur (5, 5a).

3. Appareil de commande de système de génération d'énergie (100) pour l'usine de pompage à vitesse ajustable selon l'une ou l'autre des revendications 1 et 2, en particulier la revendication 2, dans lequel ladite section de circuit de différentiation (3001) comprend une unité de commande de sortie différentielle (3002, 3002a) pour commander une sortie (dG2, dA2) du second différenciateur (6, 6a).

4. Appareil de commande de système de génération d'énergie (100) pour l'usine de pompage à vitesse ajustable selon l'une quelconque des revendications précédentes, en particulier la revendication 3, dans lequel ladite unité de commande de sortie différentielle (3002, 3002a) comprend un limiteur variable (9, 9a) pour limiter la sortie (dG2, dA2) du second différenciateur (6, 6a) et un contrôleur de limiteur variable (10, 10a) pour commander une plage limite du limiteur variable (9, 9a).

5. Appareil de commande de système de génération d'énergie (100) pour l'usine de pompage à vitesse ajustable selon l'une quelconque des revendications précédentes, en particulier l'une des revendications 2 à 4, dans lequel une valeur appliquée au premier différenciateur (5) de ladite section de circuit de différentiation (3001) est la valeur de commande d'ouverture d'aube directrice (G).

6. Appareil de commande de système de génération d'énergie (100) pour l'usine de pompage à vitesse ajustable selon l'une quelconque des revendications précédentes, en particulier la revendication 4, dans lequel une valeur appliquée en entrée du premier différenciateur (5) de ladite section de circuit de différentiation (3001) est la valeur de commande d'ouverture d'aube directrice (G), et ledit contrôleur de limiteur variable (10) commande la plage limite du limiteur variable (9) d'une manière telle que le limiteur variable (9) ne produise qu'une sortie (J) choisie parmi les sorties (dG2) du second différenciateur (6) qui apparaît pendant une période pendant laquelle la valeur de commande d'ouverture d'aube directrice (G) varie, la sortie (J) du limiteur variable (9) ayant une polarité qui correspond à une direction de changement de la valeur de commande d'ouverture d'aube directrice (G).

7. Appareil de commande de système de génération d'énergie (100) pour l'usine de pompage à vitesse ajustable selon l'une quelconque des revendications précédentes, en particulier l'une des revendications 2 à 4, dans lequel une valeur appliquée au premier différenciateur (5a) de ladite section de circuit de différentiation (3001) est la valeur de commande de puissance (A).

8. Appareil de commande de système de génération d'énergie (100) pour l'usine de pompage à vitesse ajustable selon l'une quelconque des revendications précédentes, en particulier la revendication 4, dans lequel une valeur appliquée en entrée du premier différenciateur (5a) de ladite section de circuit de différentiation (3001) est la valeur de commande de puissance (A), et ledit contrôleur de limiteur variable (10a) commande la plage limite du limiteur variable (9a) d'une manière telle que le limiteur variable (9a) ne produise qu'une sortie (M) choisie parmi les sorties (dA2) du second différenciateur (6a) qui apparaît pendant une période pendant laquelle la valeur de commande de puissance (A) varie en fonction d'une différence entre les valeurs de commande de puissance (A) actuelle et précédente, la sortie (M) du limiteur variable (9a) ayant une polarité qui correspond à une direction de changement de la valeur de commande de puissance (A).

9. Appareil de commande de système de génération d'énergie (100) pour l'usine de pompage à vitesse ajustable selon l'une quelconque des revendications précédentes, dans lequel ledit générateur de signal de commande d'aube directrice (300) comprend un premier circuit de différentiation (3001) et un second circuit de différentiation (3001a), constituant chacun une partie de ladite section de circuit de différentiation (3001), ledit premier circuit de différentiation (3001) comprenant un premier différenciateur (5) qui différentie la valeur de commande d'ouverture d'aube directrice (G) et un second différenciateur (6) qui différentie une sortie (dG1) du premier différenciateur (5), et ledit second circuit de différentiation (3001a) comprenant un premier différenciateur (5a) qui différentie la valeur de commande de puissance (A) et un second différenciateur (6a) qui différentie une sortie (dA1) du premier différenciateur (5a).

10. Appareil de commande de système de génération d'énergie (100) pour l'usine de pompage à vitesse ajustable selon l'une quelconque des revendications précédentes, en particulier la revendication 9, dans lequel au moins l'un dudit premier circuit de différentiation (3001) et dudit second circuit de différentiation (3001a) comprend une unité de commande de sortie différentielle (3002, 3002a) pour commander une sortie (dG2, dA2) du second différenciateur (6, 6a).

11. Appareil de commande de système de génération d'énergie (100) pour l'usine de pompage à vitesse ajustable selon l'une quelconque des revendications précédentes, en particulier la revendication 10, dans lequel ladite unité de commande de sortie différentielle (3002, 3002a) comprend un limiteur variable (9, 9a) pour limiter la sortie (dG2, dA2) du second différenciateur (6, 6a) et un contrôleur de limiteur variable (10, 10a) pour commander une plage limite du limiteur variable (9, 9a).

12. Appareil de commande de système de génération d'énergie (100) pour l'usine de pompage à vitesse ajustable selon l'une quelconque des revendications précédentes, en particulier la revendication 11, dans lequel ledit contrôleur de limiteur variable (10) fourni dans ledit premier circuit de différentiation (3001) commande la plage limite du limiteur variable (9) d'une manière telle que le limiteur variable (9) ne produise qu'une seule sortie (J) choisie parmi les sorties (dG2) du second différenciateur (6) qui apparaît pendant une période pendant laquelle la valeur de commande d'ouverture d'aube directrice (G) varie, la sortie (J) du limiteur variable (9) ayant une polarité qui correspond à une direction de changement de la valeur de commande d'ouverture d'aube directrice (G).

13. Appareil de commande de système de génération d'énergie (100) pour l'usine de pompage à vitesse ajustable selon l'une quelconque des revendications précédentes, en particulier la revendication 11, dans lequel ledit contrôleur de limiteur variable (10a) commande la plage limite du limiteur variable (9a) d'une manière telle que le limiteur variable (9a) ne produise qu'une sortie (M) choisie parmi les sorties (dA2) du second différenciateur (6a) qui apparaît pendant une période pendant laquelle la valeur de commande de puissance (A) varie en fonction d'une différence entre les valeurs de commande de puissance (A) actuelle et précédente, la sortie (M) du limiteur variable (9a) ayant une polarité qui correspond à une direction de changement de la valeur de commande de puissance (A).

14. Appareil de commande de système de génération d'énergie (100) pour l'usine de pompage à vitesse ajustable selon l'une quelconque des revendications précédentes, en particulier l'une des revendications 9 à 13, dans lequel le second différenciateur (6, 6a) de l'un des premier et second circuits de différentiation (3001, 3001a) a un gain de circuit plus grand de sorte que la sortie (dG2, dA2) du second différenciateur (6, 6a) dudit un des premier et second circuits de différentiation (3001, 3001a) a une valeur plus grande que celle du second différenciateur (6, 6a) de l'autre des premier et second circuits de différentiation (3001, 3001a), et le second différenciateur (6, 6a) dudit autre des premier et second circuits de différentiation (3001, 3001a) a une constante de temps de circuit plus grande de sorte que la sortie (dG2, dA2) du second différenciateur (6, 6a) dudit autre des premier et second circuits de différentiation (3001, 3001a) a une période de sortie plus longue que celle du second différenciateur (6, 6a) dudit un des premier et second circuits de différentiation (3001, 3001a).
